# EUROPEAN PATENT APPLICATION

(11) **EP 4 760 965 A1**
(43) Date of publication of application: **17.06.2026**
(21) Application number: 24921025.3
(22) Date of filing: 02.02.2024
(51) Int. Cl.: H01M 50/531, H01M 50/533, H01M 50/536

(54) **BATTERY CELL, BATTERY, AND ELECTRIC DEVICE**

(71) Applicant: Contemporary Amperex Technology Co., Limited, Ningde, Fujian 352100 (CN)
(72) Inventor: XUE, Junpeng, Ningde, Fujian 352100 (CN); YANG, Rui, Ningde, Fujian 352100 (CN); WEI, Xichen, Ningde, Fujian 352100 (CN); LI, Heyuan, Ningde, Fujian 352100 (CN)
(74) Representative: Kraus & Lederer PartGmbB
(86) International application number: PCT/CN2024/075580
(87) International publication number: WO 2025/160970

(57) **Abstract**

A battery cell (20), a battery (10), and an electric device, relating to the technical field of batteries. The battery cell (20) comprises: an electrode assembly (22) comprising a negative electrode sheet, the negative electrode sheet comprising a negative electrode active material which allows for reversible metal ion deintercalation/intercalation, and the negative electrode active material comprising a silicon element; a casing (21), an opening being formed in the casing (21), and the casing (21) being used for accommodating the electrode assembly (22); an end cover (23) covering the opening; and a current collector component (24) accommodated in the casing (21) and located on the side of the electrode assembly (22) facing the end cover (23), wherein the current connector component (24) is electrically connected to a tab of the electrode assembly (22) and the casing (21), the current connector component (24) comprises a current collector body (240) and an elastic portion (241), the current collector body (240) is of an annular structure, the elastic portion (241) is located on the inner side of the current collector body (240) and is connected to the current collector body (240), and at least part of the elastic portion (241) in the thickness direction of the end cover (23) protrudes out of the current collector body (240) and abuts against the end cover (23). The product is beneficial to taking into account of the energy density and reliability of the battery cell (20).

## Description

### TECHNICAL FIELD

The present application relates to the field of battery technologies, and in particular, to a battery cell, a battery, and an electric apparatus.

### BACKGROUND

With the increasing severity of environmental pollution, the new energy industry has attracted more and more attention. In the new energy industry, battery technology is an important factor related to its development.

For the development of battery technology, various design factors such as energy density, cycle life, and reliability need to be considered. Silicon-containing materials as negative electrode active materials are beneficial to the energy density of battery cells. However, battery cells containing silicon materials have a higher swelling rate, and the high swelling rate has a certain impact on the improvement of the reliability of battery cells. Therefore, how to provide a battery cell that can balance the energy density and reliability of the battery cell is a technical problem to be solved urgently.

### SUMMARY

The present application provides a battery cell, a battery, and an electric apparatus, which can balance the energy density and reliability of the battery cell.

According to a first aspect, a battery cell is provided, including: an electrode assembly including a negative electrode sheet, where the negative electrode sheet includes a negative electrode active material capable of reversibly deintercalating and intercalating metal ions, and the negative electrode active material includes the silicon element; a housing provided with an opening, the housing being configured to accommodate the electrode assembly; an end cover covering the opening; and a current collecting member accommodated in the housing and located on a side of the electrode assembly facing the end cover, where the current collecting member is electrically connected to a tab of the electrode assembly and the housing; where the current collecting member includes a current collecting body and an elastic portion, the current collecting body is an annular structure, the elastic portion is located on an inner side of the current collecting body and connected to the current collecting body, and at least a portion of the elastic portion along a thickness direction of the end cover protrudes from the current collecting body and abuts against the end cover.

In the embodiments of the present application, the current collecting member is located on a side of the electrode assembly facing the end cover and is electrically connected to the tab of the electrode assembly and the housing, so that the electrical connection between the electrode assembly and the housing can be achieved through the current collecting member. The negative electrode active material in the battery cell includes silicon, the battery cell has a higher energy density, and the electrode assembly in the battery cell has a greater swelling degree. The elastic portion in the current collecting member has the capability of elastically deforming. When the electrode assembly swells, the elastic portion is compressed so as to provide space for the swelling of the electrode assembly. Compared with a non-deformable rigid component, the deformable elastic portion can weaken the squeezing effect on the electrode assembly, thereby reducing the risk of the electrode assembly being squeezed, and helping to improve the reliability of the battery cell. Therefore, the technical solutions of the embodiments of the present application can balance the energy density and reliability of the battery cell.

In a possible implementation, the elastic portion can deform during charging and discharging of the battery cell. During charging and discharging of the battery cell, the electrode assembly swells, and since the elastic portion can deform during charging and discharging of the battery cell, the elastic portion can be compressed so as to provide space for the swelling of the electrode assembly, thereby reducing the risk of the electrode assembly being squeezed.

In a possible implementation, the end cover is provided with a first protruding portion, where the first protruding portion protrudes toward the electrode assembly along the thickness direction of the end cover, and the first protruding portion abuts against the elastic portion.

In the above technical solution, the provision of the first protruding portion is conducive to improving the strength of the end cover, and the abutment of the first protruding portion against the elastic portion is also conducive to reducing the size by which the elastic portion protrudes from the current collecting body.

In a possible implementation, the current collecting member further includes a central portion, where the central portion is located on an inner side of the elastic portion. In this way, the elastic portion is located between the central portion and the current collecting body, and the central portion corresponds to a central area of the tab of the electrode assembly, thereby helping to provide a certain supporting effect for the tab.

In a possible implementation, the central portion abuts against the tab of the electrode assembly. In this way, the central portion can provide a certain supporting effect for the tab, which is conducive to reducing shaking of the electrode assembly in the housing.

In a possible implementation, the elastic portion includes a first sheet, a second sheet, and a central portion, where the first sheet is connected to the inner side of the current collecting body and extends obliquely in a direction approaching the end cover, the second sheet is connected to an outer side of the central portion and extends obliquely in a direction approaching the end cover, the first sheet and the second sheet are connected at an included angle of greater than 0° and less than 180° to form an abutting area, and the abutting area abuts against the end cover.

In the above technical solution, the central portion abuts against the electrode assembly, the abutting area formed by the connection of the first sheet and the second sheet abuts against the end cover, and the elastic portion has the capability of elastically deforming, so that during the swelling of the electrode assembly, the abutting area is compressed so as to provide space for the swelling of the electrode assembly, and the central portion can provide a relatively soft supporting effect for the electrode assembly. This can reduce the intensity of squeezing on the electrode assembly, thereby reducing the risks of falling-off of coating, lithium precipitation, and the like caused by excessive squeezing of the electrode assembly.

In a possible implementation, the end cover includes an end cover body and a first protruding portion, where the first protruding portion protrudes toward the electrode assembly along the thickness direction of the end cover, and the first protruding portion abuts against the abutting area. The provision of the first protruding portion is conducive to improving the strength of the end cover, and is also conducive to the abutment of the end cover against the abutting area of the elastic portion.

In a possible implementation, the elastic portion is provided with a first through hole running through the elastic portion along a thickness direction of the elastic portion, where the first through hole extends from the first sheet to the second sheet.

The provision of the first through hole is more conducive to the deformation of the elastic portion, thereby further reducing the risk of the electrode assembly being squeezed. In addition, the provision of the first through hole is also conducive to the discharge of high-temperature and high-pressure substances inside the battery cell during thermal runaway.

In a possible implementation, a plurality of elastic portions are provided, and the elastic portions are arranged at intervals along a circumferential direction of the current collecting body. In this way, the elastic portions are more uniformly distributed in the current collecting member, and the deformation of the plurality of elastic portions is more uniform, thereby helping to more uniformly alleviate the squeezing force on the electrode assembly and reduce the risk of different areas of the electrode assembly being squeezed to different degrees. In addition, the intervals between adjacent elastic portions are also conducive to forming relatively smooth exhaust channels, and are conducive to the discharge of high-temperature and high-pressure substances inside the battery cell during thermal runaway.

In a possible implementation, the current collecting member further includes a current collecting sheet connected to the current collecting body, where one current collecting sheet is provided between two adjacent elastic portions, a side surface of the current collecting sheet facing away from the end cover is connected to the tab of the electrode assembly, and the current collecting sheet is spaced from the elastic portion.

In the above technical solution, the side surface of the current collecting sheet facing away from the end cover is connected to the electrode assembly, so that the current of the electrode assembly can be transmitted to the housing through the current collecting sheet. The current collecting sheet is spaced from the elastic portion, so that a spaced area between the current collecting sheet and the elastic portion can form a smooth exhaust channel, which is conducive to smooth discharge of emissions from the battery cell. In addition, the spaced area is provided between the current collecting sheet and the elastic portion, and the current collecting sheet can move relative to the current collecting body, helping to reduce the risk of the electrode assembly being squeezed or torn.

In a possible implementation, at least one current collecting sheet is welded to the tab of the electrode assembly to form a plurality of welded portions, and the plurality of welded portions are arranged at intervals along the circumferential direction of the current collecting body. The provision of the plurality of welded portions is conducive to enhancing the connection strength between the tab and the current collecting sheet.

In a possible implementation, the welded portions include a first welded portion and two second welded portions, where the first welded portion is located between the two second welded portions, and a length of the first welded portion is greater than a length of the second welded portion. In this way, the provision of the first welded portion and the second welded portion is adapted to the shape of the current collecting sheet, facilitating welding between the welded portions and the current collecting sheet.

In a possible implementation, the end cover is provided with an end cover body and a pressure relief mechanism, where the pressure relief mechanism is located on an inner side of the end cover body, and the elastic portion abuts against the pressure relief mechanism.

In the above technical solution, the pressure relief mechanism is located on the inner side of the end cover body, which can reduce the risk of the pressure relief mechanism being damaged due to interference with components outside the battery cell, helping to improve the long-term reliability of the pressure relief mechanism. The elastic portion abuts against the pressure relief mechanism, facilitating the connection between the elastic portion and the end cover.

In a possible implementation, the pressure relief mechanism is provided with a first protruding portion, where the first protruding portion protrudes toward the electrode assembly along the thickness direction of the end cover, and the first protruding portion abuts against an abutting area of the elastic portion. In this way, the connection between the elastic portion and the end cover is facilitated.

In a possible implementation, the end cover is provided with a score groove, an area defined by the score groove forms the pressure relief mechanism, and the first protruding portion is located on an inner side of the score groove and spaced from the score groove. In this way, the preparation of the score groove is facilitated, and adverse effects on the precision of the score groove can be reduced. In addition, this is also conducive to reducing the risk of the pressure relief mechanism interfering with structures outside the battery cell.

In a possible implementation, a limiting portion is disposed on an inner side surface of the housing in a protruding manner, the current collecting member abuts against the limiting portion, and the tab of the electrode assembly is electrically connected to the housing through the current collecting member. This can not only limit the end cover but also limit the current collecting member, so that the current collecting member can limit the movement of the electrode assembly, reducing the displacement of the electrode assembly in the housing along the thickness direction of the end cover, and reducing the risk of failure of the connection between the tab of the electrode assembly and the current collecting member due to excessive displacement.

In a possible implementation, the current collecting member is welded to the housing. In this way, the electrical connection between the current collecting member and the housing is achieved by welding.

In a possible implementation, the negative electrode active material includes at least one of elemental silicon, a silicon-oxygen compound, a silicon-carbon composite, a silicon-nitrogen composite, a silicon-containing alloy, or a silicon-oxygen-carbon composite material. The above negative electrode active material has a higher gram capacity, and the use of the above negative electrode active material is conducive to increasing the energy density of the battery cell.

In a possible implementation, based on a total mass of the negative electrode active material, a mass percentage A of silicon in the negative electrode active material satisfies: 1wt%≤A≤15wt%. Optionally, 2wt%≤A≤8wt%. In this way, in the negative electrode active material, silicon has an appropriate mass percentage, so that the electrode assembly has a relatively appropriate swelling rate, facilitating normal use of the battery cell.

In a possible implementation, the electrode assembly further includes a positive electrode sheet and a separator, where the separator is located between the positive electrode sheet and the negative electrode sheet; and the positive electrode sheet includes a positive electrode active material, and a chemical formula of the positive electrode active material satisfies: Li₁₊ₐ[NiₓCo_{y}Mn_{z}M_{b}]O₂, where M includes at least one of Zr, Al, Ti, Sb, Nb, Te, Mg, B, Ca, V, Ta or Sr, 0.1≥a≥-0.1, 1>x≥0.7, 0.3>y>0, 0.3>z>0, 0.3>b≥0, and x+y+z+b=1.

The positive electrode active material satisfying the above chemical formula has a higher gram capacity, so that the battery cell prepared using the above positive electrode active material has a higher energy density.

In a possible implementation, a material of the housing includes carbon steel or stainless steel. The steel housing is not easily corroded by an electrolyte, which is conducive to improving the reliability of the battery cell.

In a possible implementation, the battery cell is a cylindrical battery cell. In this way, the shape of the battery cell is adapted to the shape of the current collecting member, facilitating assembly of the battery cell.

In a possible implementation, the housing includes a cylinder and a cover connected to the cylinder, where the cover and the cylinder are formed as an integrated or separate structure, the cylinder is arranged around a periphery of the electrode assembly, and the cover is provided with an electrode lead-out hole; and the battery cell further includes an electrode terminal, and the electrode terminal is disposed in the electrode lead-out hole in an insulating manner. In this way, one of the housing and the electrode terminal is a positive electrode output pole of the battery cell, and the other is a negative electrode output pole of the battery cell. At least a portion of the housing can serve as one output pole of the battery cell, thereby omitting one electrode terminal, and helping to simplify the structure of the battery cell.

According to a second aspect, a battery is provided, including the battery cell as described in the first aspect and any possible implementation thereof.

According to a third aspect, an electric apparatus is provided, including the battery as described in the second aspect.

In the embodiments of the present application, the current collecting member is located on the side of the electrode assembly facing the end cover and is electrically connected to the tab of the electrode assembly and the housing, so that the electrical connection between the electrode assembly and the housing can be achieved through the current collecting member. The negative electrode active material in the battery cell includes the silicon element, the battery cell has a higher energy density, and the electrode assembly in the battery cell has a greater swelling degree. The elastic portion in the current collecting member has the capability of elastically deforming. When the electrode assembly swells, the elastic portion is compressed so as to provide space for the swelling of the electrode assembly. Compared with a non-deformable rigid component, the deformable elastic portion can weaken the squeezing effect on the electrode assembly, thereby reducing the risk of the electrode assembly being squeezed, and helping to improve the reliability of the battery cell. Therefore, the technical solutions of the embodiments of the present application can balance the energy density and reliability of the battery cell.

### BRIEF DESCRIPTION OF DRAWINGS

In order to more clearly illustrate the technical solutions of the embodiments of the present application, the drawings required to be used in the embodiments of the present application will be briefly introduced below. Apparently, the drawings described below are merely some embodiments of the present application, and those of ordinary skill in the art can obtain other drawings based on these drawings without creative efforts.
FIG. 1 is a schematic structural diagram of a vehicle according to an embodiment of the present application;
FIG. 2 is a schematic structural diagram of a battery according to an embodiment of the present application;
FIG. 3 is a schematic exploded view of a structure of a battery cell according to an embodiment of the present application;
FIG. 4 is a schematic structural diagram of a battery cell according to an embodiment of the present application;
FIG. 5 is a cross-sectional view of the battery cell in FIG. 4 along A-A;
FIG. 6 is an enlarged schematic diagram of area B in FIG. 5;
FIG. 7 is a schematic diagram of an electrode assembly according to an embodiment of the present application;
FIG. 8 is a schematic structural diagram of a current collecting member according to an embodiment of the present application;
FIG. 9 is a schematic structural diagram of a current collecting member according to an embodiment of the present application;
FIG. 10 is a schematic structural diagram of a current collecting member according to an embodiment of the present application;
FIG. 11 is a schematic structural diagram of an end cover according to an embodiment of the present application;
FIG. 12 is a schematic exploded view of a structure of a battery cell according to another embodiment of the present application;
FIG. 13 is a schematic structural diagram of a battery cell according to an embodiment of the present application;
FIG. 14 is a cross-sectional view of the battery cell in FIG. 13 along A'-A'; and
FIG. 15 is an enlarged schematic diagram of area C in FIG. 14.

In the drawings, the drawings are not drawn to actual scale.

Reference signs: 1. vehicle; 10. battery; 30. controller; 40. motor; 3. box; 31. first box body; 32. second box body; 20. battery cell; 21. housing; 210. cylinder; 211. cover; 2111. electrode lead-out hole; 22. electrode assembly; 23. end cover; 24. current collecting member; 25. electrode terminal; 26. pressure relief mechanism; 261. score groove; 240. current collecting body; 241. elastic portion; 242. current collecting sheet; 2411. first sheet; 2412. second sheet; 2413. central portion; 2414. abutting area; 2415. first through hole; 2401. first gap; 2402. second gap; 231. end cover body; and 232. first protruding portion.

### DESCRIPTION OF EMBODIMENTS

The technical solutions in the embodiments of the present application will be described below in conjunction with the drawings.

In order to make the objectives, technical solutions, and advantages of the embodiments of the present application clearer, the technical solutions in the embodiments of the present application will be clearly described below in conjunction with the drawings in the embodiments of the present application. Apparently, the described embodiments are some of the embodiments of the present application, rather than all of the embodiments. Based on the embodiments in the present application, all other embodiments obtained by those of ordinary skill in the art without creative efforts fall within the protection scope of the present application.

Unless otherwise defined, all technical and scientific terms used in the present application have the same meanings as commonly understood by those skilled in the technical field to which the present application belongs; the terms used in the specification of the present application are only for the purpose of describing specific embodiments and are not intended to limit the present application; the terms "include", "comprise", "have", and any variations thereof in the specification and claims of the present application and the above description of the drawings are intended to cover non-exclusive inclusion. The terms "first", "second", and the like in the specification and claims of the present application or the above drawings are used to distinguish different objects, rather than to describe a specific order or primary-secondary relationship.

Reference to "embodiment" in the present application means that a specific feature, structure, or characteristic described in conjunction with the embodiment may be included in at least one embodiment of the present application. The appearance of the phrase in various places in the specification does not necessarily refer to the same embodiment, nor is it an independent or alternative embodiment that is mutually exclusive with other embodiments. Those skilled in the art explicitly and implicitly understand that the embodiments described in the present application can be combined with other embodiments.

In the description of the present application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. For those of ordinary skill in the art, the specific meanings of the above terms in the present application can be understood according to specific situations.

The term "and/or" in the present application is merely an associative relationship for describing associated objects, indicating that three relationships may be present. For example, A and/or B may indicate the following three cases: presence of only A, presence of both A and B, and presence of only B. In addition, the character "/" in the present application generally indicates that the associated objects before and after are in an "or" relationship.

In the embodiments of the present application, the same reference signs denote the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary descriptions and should not constitute any limitation to the present application.

"A plurality of" appearing in the present application means two or more (including two), similarly, "a plurality of groups" means two or more groups (including two groups), and "a plurality of pieces" means two or more pieces (including two pieces).

In the embodiments of the present application, a battery cell may be a secondary battery, where the secondary battery refers to a battery cell that can continue to be used by activating an active material by charging after the battery cell is discharged.

The battery cell may be a lithium-ion battery, a sodium-ion battery, a lithium-sodium-ion battery, a lithium metal battery, a sodium metal battery, a lithium-sulfur battery, a magnesium-ion battery, a nickel-hydrogen battery, a nickel-cadmium battery, a lead-acid battery, or the like. This is not limited in the embodiments of the present application.

In some implementations, the battery cell in the embodiments of the present application may be a metal battery. Specifically, the metal battery may include a lithium metal secondary battery, a sodium metal battery, a magnesium metal battery, or the like. This is not limited in the embodiments of the present application.

A battery cell typically includes an electrode assembly. The electrode assembly includes a positive electrode sheet, a negative electrode sheet, and a separator. During charging and discharging of the battery cell, active ions (such as lithium ions) intercalate and deintercalate back and forth between the positive electrode sheet and the negative electrode sheet. The separator is disposed between the positive electrode sheet and the negative electrode sheet, which can prevent short circuit between a positive electrode and a negative electrode while allowing active ions to pass through.

In some embodiments, the positive electrode sheet may include a positive electrode current collector and a positive electrode film layer provided on at least one surface of the positive electrode current collector. The positive electrode film layer includes a positive electrode active material. Optionally, the positive electrode film layer further includes a conductive agent and a binder.

As an example, the positive electrode current collector has two surfaces opposite in its own thickness direction, and the positive electrode film layer is provided on either or both of the two opposite surfaces of the positive electrode current collector.

As an example, the positive electrode current collector may be a metal foil, foamed metal, or a composite current collector. For example, as a metal foil, aluminum or stainless steel with a silver-plated surface, stainless steel, copper, aluminum, nickel, carbon electrode, carbon, nickel, titanium, or the like can be used. Foamed metal may be foamed nickel, foamed copper, foamed aluminum, foamed alloy, foamed carbon, or the like. The composite current collector can include a polymer substrate and a metal layer. The composite current collector can be formed by forming a metal material (aluminum, aluminum alloy, nickel, nickel alloy, titanium, titanium alloy, silver and silver alloy, or the like) on a polymer substrate (such as a substrate of polypropylene, polyethylene terephthalate, polybutylene terephthalate, polystyrene, or polyethylene).

As an example, the positive electrode active material may include at least one of the following materials: lithium-containing phosphate, lithium transition metal oxide, and their respective modified compounds. However, the present application is not limited to these materials, and other conventional materials that can be used as positive electrode active materials for batteries can also be used. These positive electrode active materials can be used alone or in combination of two or more. Examples of lithium-containing phosphate may include but are not limited to at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium iron manganese phosphate, and a composite material of lithium iron manganese phosphate and carbon.

In some embodiments, the negative electrode sheet may include a negative electrode current collector and a negative electrode film layer provided on at least one surface of the negative electrode current collector. The negative electrode film layer includes a negative electrode active material. Optionally, the negative electrode film layer includes a conductive agent and a binder.

As an example, the negative electrode current collector has two surfaces opposite in its own thickness direction, and the negative electrode film layer is provided on either or both of the two opposite surfaces of the negative electrode current collector.

As an example, the negative electrode current collector may be a metal foil, foamed metal, or a composite current collector. For example, as a metal foil, aluminum or stainless steel with a silver-plated surface, stainless steel, copper, aluminum, nickel, carbon electrode, carbon, nickel, titanium, or the like can be used. The composite current collector may include a polymer substrate and a metal layer. Foamed metal may be foamed nickel, foamed copper, foamed aluminum, foamed alloy, foamed carbon, or the like. The composite current collector can be formed by forming a metal material (copper, copper alloy, nickel, nickel alloy, titanium, titanium alloy, silver, silver alloy, or the like) on a polymer substrate (such as a substrate of polypropylene, polyethylene terephthalate, polybutylene terephthalate, polystyrene, polyethylene, or the like).

In some implementations, the electrode assembly further includes a separator, and the separator is disposed between the positive electrode sheet and the negative electrode sheet.

In some implementations, the separator is a separator film. The present application has no particular restriction on the type of the separator film, and any well-known porous separator film with good chemical stability and mechanical stability can be used.

As an example, a main material of the separator film may be selected from at least one of glass fiber, non-woven fabric, polyethylene, polypropylene, polyvinylidene fluoride, and ceramic.

In some implementations, the separator is a solid electrolyte. The solid electrolyte is disposed between the positive electrode sheet and the negative electrode sheet, and simultaneously serves to transport ions and separate the positive electrode and the negative electrode.

In some implementations, the battery cell further includes an electrolyte, and the electrolyte serves to conduct ions between the positive electrode and the negative electrode. The present application has no specific restriction on the type of the electrolyte, which can be selected according to requirements. The electrolyte may be in a liquid state, a gel state, or a solid state.

In some implementations, the electrode assembly is provided with a tab, and the tab can lead current out of the electrode assembly. The tab includes a positive tab and a negative tab.

In some implementations, the battery cell may include a housing. The housing is configured to encapsulate components such as the electrode assembly and the electrolyte. The housing may be a steel shell, an aluminum shell, a plastic shell (such as polypropylene), a composite metal shell (such as a copper-aluminum composite shell), an aluminum-plastic film, or the like.

The battery mentioned in the embodiments of the present application may include one or more battery cells to provide a single physical module with higher voltage and capacity. When a plurality of battery cells are provided, the plurality of battery cells are connected in series, parallel, or series-parallel through a busbar component.

In some embodiments, the battery may be a battery pack, the battery pack may include a box and a battery cell, and the battery cell or the battery module is accommodated in the box.

In some embodiments, the box may be a portion of a chassis structure of a vehicle. For example, a portion of the box may become at least a portion of a floor of the vehicle, or a portion of the box may become at least a portion of a cross beam and longitudinal beam of the vehicle.

In some embodiments, the battery can be located in an energy storage device. The energy storage device includes an energy storage container, an energy storage electric cabinet, and the like.

For the development of battery technology, various design factors such as energy density, cycle life, discharge capacity, charge-discharge rate, and reliability need to be considered simultaneously. In some arrangements, a silicon-containing material is selected as the negative electrode active material to prepare a battery cell to increase the energy density of the battery cell. However, although such a battery cell has a higher energy density, due to the higher swelling rate of the silicon-containing material, the problem of swelling of the battery cell during use is more prominent. Therefore, how to provide a battery cell to reduce the adverse effects of high swelling rate on the battery cell and balance the energy density and reliability of the battery cell is a technical problem to be solved urgently.

In view of this, embodiments of the present application provide a battery cell. The battery cell includes a silicon-containing negative electrode active material. A current collecting member in the battery cell includes an elastic portion protruding from a current collecting body. The elastic portion abuts against an end cover of the battery cell. Since the elastic portion has the capability of elastically deforming, during the swelling of an electrode assembly, the elastic portion can be compressed to provide buffer space for the swelling of the electrode assembly, reducing the risk of the electrode assembly being squeezed, thereby helping to balance the energy density and reliability of the battery cell.

The technical solutions described in the embodiments of the present application are applicable to various electric devices using batteries.

The electric device may be a vehicle, a mobile phone, a portable device, a notebook computer, a ship, a spacecraft, an electric toy, an electric tool, or the like. The vehicle may be a fuel vehicle, a gas vehicle, or a new energy vehicle. The new energy vehicle may be a battery electric vehicle, a hybrid vehicle, an extended-range vehicle, or the like. The spacecraft includes an airplane, a rocket, a space shuttle, a spaceship, and the like. The electric toy includes a fixed or mobile electric toy, such as a game console, an electric toy car, an electric toy ship, and an electric toy airplane. The electric tool includes a metal cutting electric tool, an electric grinding tool, an electric assembly tool, and an electric railway-specific tool, such as an electric drill, an electric grinder, an electric wrench, an electric screwdriver, an electric hammer, an impact drill, a concrete vibrator, and an electric planer. The embodiments of the present application do not impose particular limitations on the above electric devices.

For ease of description, the following embodiments are described by taking the electric device being a vehicle as an example.

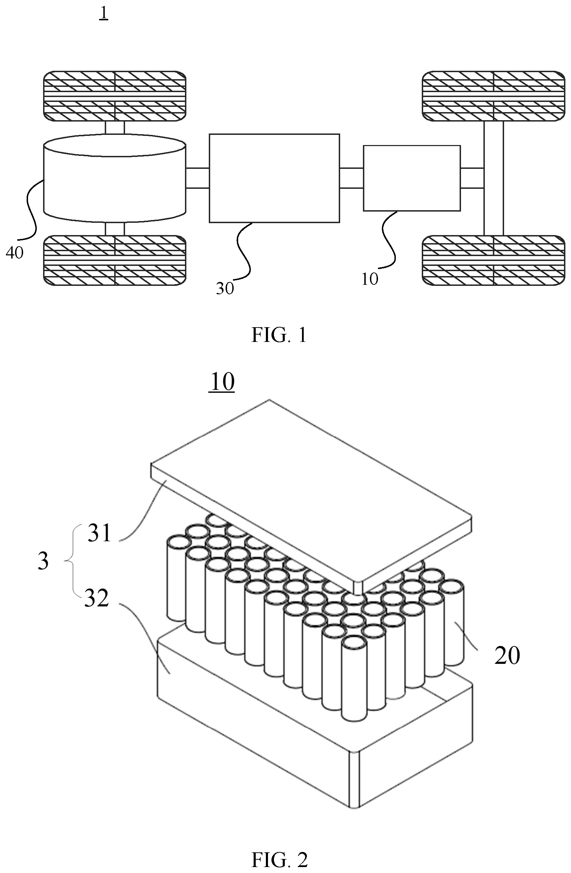

For example, as shown in FIG. 1 which is a schematic structural diagram of a vehicle according to an embodiment of the present application, a vehicle 1 may be a fuel vehicle, a gas vehicle, or a new energy vehicle. The new energy vehicle may be a battery electric vehicle, a hybrid vehicle, an extended-range vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom or head or tail of the vehicle 1. The battery 10 may be configured to supply power to the vehicle 1. For example, the battery 10 may be used as an operating power source of the vehicle 1 for a circuit system of the vehicle 1, for example, to satisfy power needs of start, navigation, and driving of the vehicle 1. In another embodiment of the present application, the battery 10 can not only be used as an operating power source of the vehicle 1, but also can be used as a driving power source of the vehicle 1, replacing or partially replacing fuel or natural gas to provide driving power for the vehicle 1.

In order to meet different power usage requirements, the battery 10 may include a plurality of battery cells. According to different power requirements, the number of battery cells 20 may be set to any value. A plurality of battery cells 20 may be connected in series, parallel, or series-parallel to achieve greater capacity or power. Since the number of battery cells 20 included in each battery 10 may be large, for ease of installation, the battery cells 20 can be grouped, and each group of battery cells 20 constitute a battery module. The number of battery cells 20 included in the battery module is not limited and can be set according to requirements. The battery may include a plurality of battery modules, and these battery modules can be connected in series, parallel, or series-parallel.

For example, as shown in FIG. 2 which is a schematic structural diagram of a battery according to an embodiment of the present application, the battery 10 may include a plurality of battery cells 20. The battery 10 may further include a box 3. The interior of the box 3 is a hollow structure. The plurality of battery cells 20 are accommodated in the box 3. For example, the plurality of battery cells 20 are connected in parallel, series, or series-parallel and then placed in the box 3. The box 3 may include a first box body 31 and a second box body 32. The first box body 31 and the second box body 32 fit each other to form the box 3. The first box body 31 and the second box body 32 may each be a hollow structure with an opening at one end. Alternatively, the first box body 31 may be a plate-shaped structure, and the second box body 32 may be a hollow structure with an opening at one end.

Optionally, the battery 10 may further include other structures. Details are not further described herein. For example, the battery 10 may further include a busbar component. The busbar component is configured to achieve electrical connection between the plurality of battery cells 20, such as parallel connection, series connection, or series-parallel connection. Specifically, the busbar component can achieve electrical connection between the battery cells 20 by connecting electrode terminals of the battery cells 20. Further, the busbar component can be fixed to the electrode terminals of the battery cells 20 by welding. The electric energy of the plurality of battery cells 20 can be further led out through a conductive mechanism passing through the box 3. Optionally, the conductive mechanism can also belong to the busbar component.

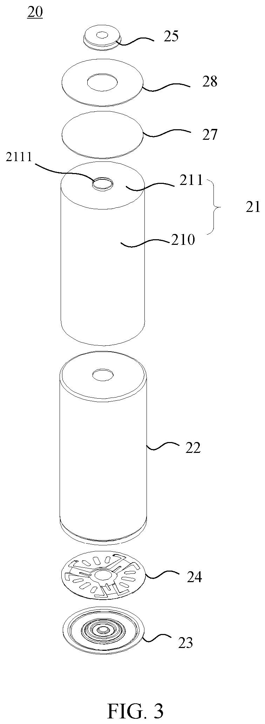

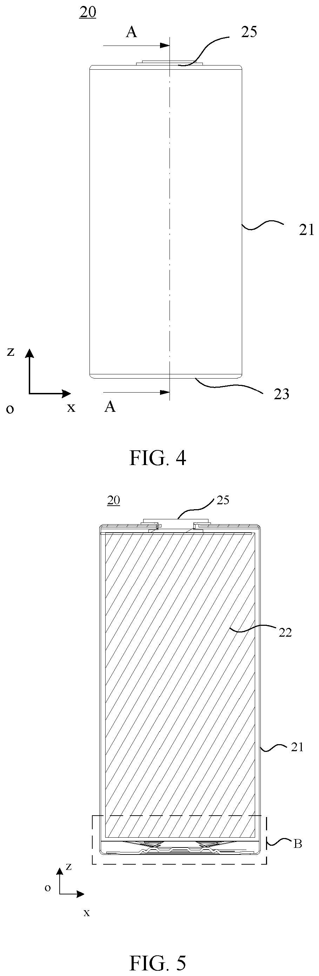

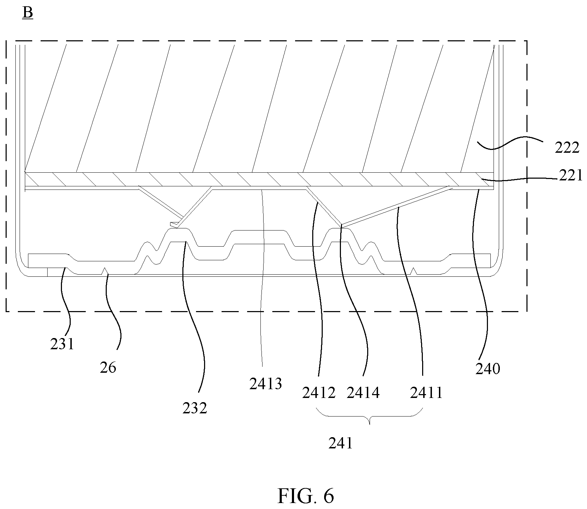

FIG. 3 is a schematic exploded view of a structure of a battery cell according to an embodiment of the present application. FIG. 4 is a schematic diagram of a battery cell according to an embodiment of the present application. FIG. 5 is a cross-sectional view of the battery cell in FIG. 4 along A-A. FIG. 6 is an enlarged schematic diagram of area B in FIG. 5.

In an embodiment of the present application, for example, as shown in FIGs. 3 to 6, the battery cell 20 includes: a housing 21, an electrode assembly 22, an end cover 23, and a current collecting member 24.

The housing 21 is provided with an opening, and the housing 21 is configured to accommodate the electrode assembly 22 and the current collecting member 24.

The housing 21 may be a hollow structure with an opening at one end, or a hollow structure with openings at both ends. As an example, referring to FIG. 3, the housing 21 is a hollow structure with an opening at one end, and the end cover 23 is configured to cover the opening of the housing 21.

The housing 21 may be made of various materials such as copper, iron, aluminum, steel, and aluminum alloy. The housing 21 may have various shapes, such as a cylindrical shape and a cuboid shape. As an example, in an embodiment of the present application, a material of the housing 21 is steel, and the housing 21 is a cylinder.

The electrode assembly 22 is a component in the battery cell 20 where electrochemical reactions occur. The electrode assembly 22 includes a positive electrode sheet, a negative electrode sheet, and a separator located between the positive electrode sheet and the negative electrode sheet. The positive electrode sheet includes a positive electrode current collector and a positive electrode film layer. The positive electrode film layer is applied on a surface of the positive electrode current collector. The current collector not coated with the positive electrode film layer protrudes from the current collector coated with the positive electrode film layer, and the current collector not coated with the positive electrode film layer serves as a positive tab. The negative electrode sheet includes a negative electrode current collector and a negative electrode film layer. The negative electrode film layer is applied on a surface of the negative electrode current collector. The current collector not coated with the negative electrode film layer protrudes from the current collector coated with the negative electrode film layer, and the current collector not coated with the negative electrode film layer serves as a negative tab. The positive electrode sheet, the separator, and the negative electrode sheet can form the electrode assembly 22 by winding or stacking.

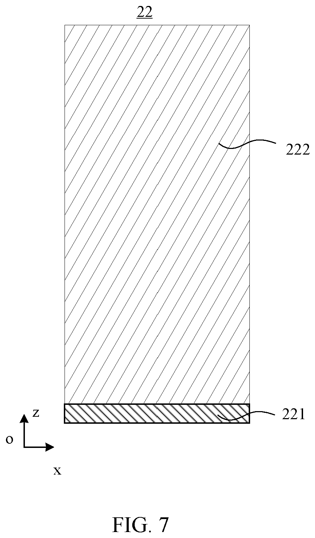

As an example, the positive electrode sheet, the separator, and the negative electrode sheet are wound into the electrode assembly 22. In the wound electrode assembly 22, an area provided with the positive electrode film layer and/or the negative electrode film layer can be referred to as a main body portion of the electrode assembly 22, and an area not provided with the positive electrode film layer and the negative electrode film layer is referred to as a tab of the electrode assembly 22. FIG. 7 is a schematic diagram of an electrode assembly according to an embodiment of the present application. For example, as shown in FIG. 7, the electrode assembly 22 includes a tab 221 and a main body portion 222. Along an axial direction of the cylindrical electrode assembly 22 (for example, a direction z in FIG. 7), the tab 221 is closer to the current collecting member 24 than the main body portion 222.

The negative electrode sheet includes a negative electrode current collector and a negative electrode film layer provided on at least one side surface of the negative electrode current collector. The negative electrode film layer includes a negative electrode active material capable of reversibly deintercalating and intercalating metal ions. The negative electrode active material includes the silicon element.

Metal ions can be reversibly deintercalated from the negative electrode active material or reversibly intercalated into the negative electrode active material. As an example, in a lithium-ion battery cell, lithium ions can be reversibly intercalated into the negative electrode active material or deintercalated from the negative electrode active material. As another example, in a sodium-ion battery cell, sodium ions can be reversibly intercalated into the negative electrode active material or deintercalated from the negative electrode active material.

The negative electrode active material includes the silicon element. For example, the negative electrode active material may be a silicon-based material.

Optionally, the negative electrode active material further includes the carbon element. For example, the negative electrode active material is a silicon-carbon composite material.

In addition to the negative electrode active material, the negative electrode film layer may further include a conductive agent and a binder. As an example, in the process of preparing the negative electrode sheet, the negative electrode active material, the conductive agent, and the binder are mixed to prepare a slurry, and the slurry is applied on the negative electrode current collector to prepare the negative electrode film layer.

The end cover 23 is configured to cover the opening of the housing 21 to isolate the internal environment of the battery cell 20 from the external environment. The end cover 23 covers the opening of the housing 21. The end cover 23 and the housing 21 jointly define a sealed space for accommodating the electrode assembly 22, the electrolyte, and the current collecting member 24.

The shape of the end cover 23 may be adapted to the shape of the housing 21. For example, the housing 21 is a cuboid structure, and the end cover 23 is a rectangular plate-shaped structure adapted to the housing 21. For another example, the housing 21 is a cylindrical structure, and the end cover 23 is a circular plate-shaped structure adapted to the housing 21. The end cover 23 may also be made of various materials. Illustratively, the end cover 23 may be made of a metal material, such as copper, iron, aluminum, steel, or aluminum alloy. The material of the end cover 23 and the material of the housing 21 may be the same or different. As an example, the material of the end cover 23 is copper.

In the battery cell 20, one or two end covers 23 may be provided. If the housing 21 is a hollow structure with an opening formed at one end, one end cover 23 is correspondingly provided. If the housing 21 is a hollow structure with openings formed at both ends, two end covers 23 are correspondingly provided, and the two end covers 23 respectively cover the two openings of the housing 21. One of the positive tab and the negative tab of the electrode assembly 22 is electrically connected to one end cover 23, and the other is electrically connected to the housing 21. In an embodiment where the housing 21 is a hollow structure with an opening at one end, an electrode terminal 25 may be provided at one end of the housing 21 facing away from the end cover 23, the electrode terminal 25 is connected to the housing 21 in an insulating manner, one of the positive tab and the negative tab of the electrode assembly 22 is electrically connected to the housing 21, and the other is electrically connected to the electrode terminal 25.

The current collecting member 24 is accommodated in the housing 21 and located on a side of the electrode assembly 22 facing the end cover 23, and the current collecting member 24 is electrically connected to the electrode assembly 22 and the housing 21. In this way, the housing 21 can serve as one output pole of the battery cell 20. Specifically, the current collecting member 24 is electrically connected to the tab 221 of the electrode assembly 22 and the housing 21.

The current collecting member 24 may be a disc-shaped member disposed between the end cover 23 and the electrode assembly 22. For example, the housing 21 is a cylinder, and the current collecting member 24 is a disc structure. The current collecting member 24 may be a metal conductor, such as copper, iron, aluminum, steel, or aluminum alloy.

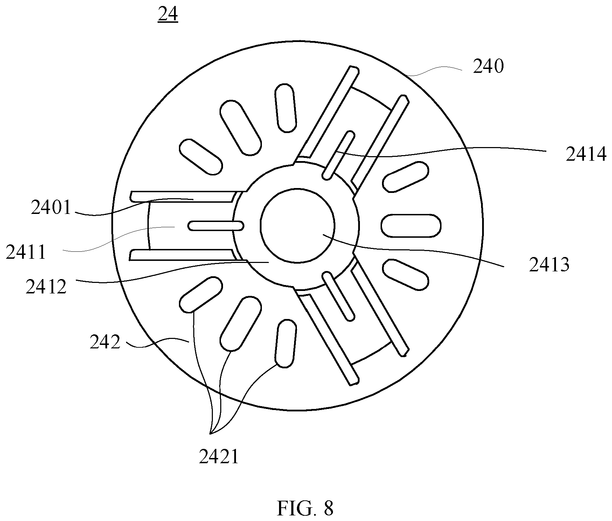

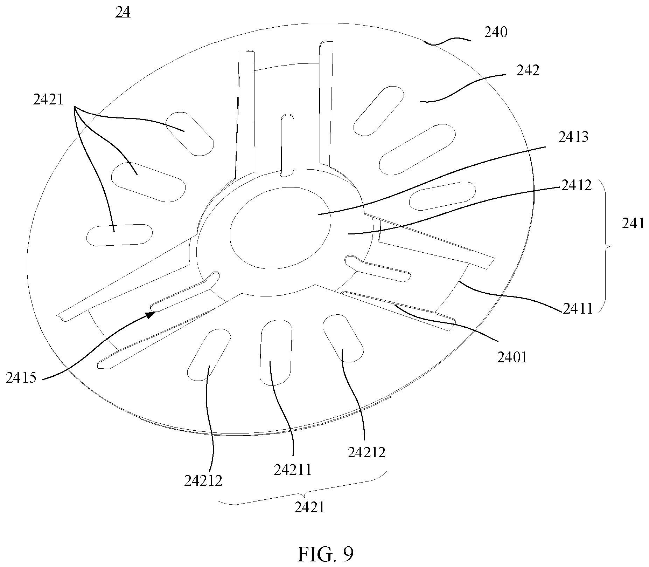

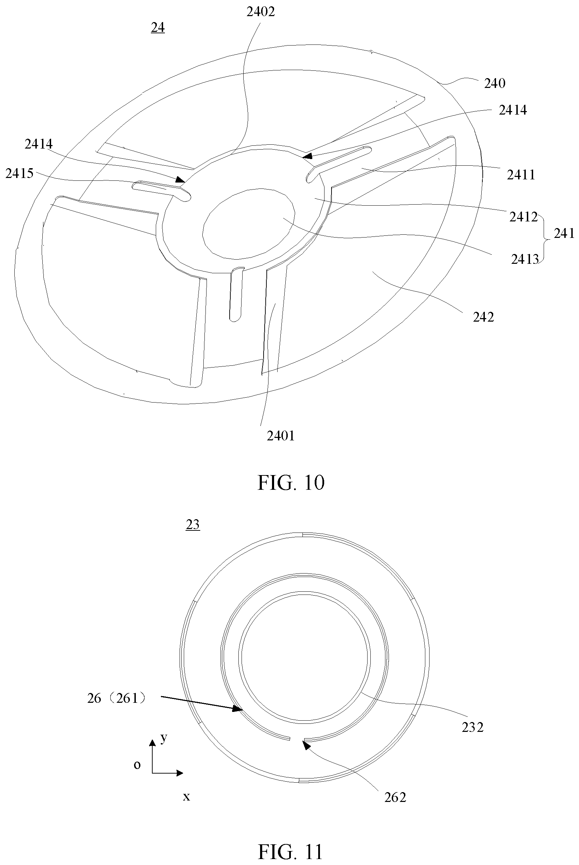

FIG. 8 is a schematic structural diagram of a current collecting member according to an embodiment of the present application. FIG. 9 is a schematic structural diagram of a current collecting member according to an embodiment of the present application. FIG. 10 is a schematic structural diagram of a current collecting member according to an embodiment of the present application. FIGs. 8 to 10 may be schematic structural diagrams of the current collecting member from different perspectives respectively.

Referring to FIGs. 7 to 10, the current collecting member 24 includes a current collecting body 240 and an elastic portion 241. The current collecting body 240 is an annular structure. The elastic portion 241 is located on an inner side of the current collecting body 240 and connected to the current collecting body 240. At least a portion of the elastic portion 241 along a thickness direction of the end cover 23 protrudes from the current collecting body 240 and abuts against the end cover 23.

Along the thickness direction of the end cover 23, the elastic portion 241 protrudes relative to the current collecting body 240 in a direction facing away from the electrode assembly 22 and abuts against the end cover 23.

Along the thickness direction of the end cover 23, the elastic portion 241 can partially protrude from the current collecting body 240 and abut against the end cover 23, or can entirely protrude from the current collecting body 240 and abut against the end cover 23. By setting at least a portion of the elastic portion 241 along the thickness direction of the end cover 23 to protrude from the current collecting body 240, the abutment of the elastic portion 241 against the end cover 23 is facilitated.

In the case where the negative electrode active material in the negative electrode sheet includes the silicon element, the negative electrode active material can accommodate more metal ions, which can effectively increase the energy density of the battery cell. In addition, the deformation amount of the electrode assembly 22 in the battery cell during use can also be increased, especially during charging of the battery cell, metal ions are intercalated into the negative electrode active material of the negative electrode sheet, causing the electrode assembly 22 to undergo volume swelling, thus increasing the pressure of the electrode assembly 22 on the end cover 23 of the battery cell. By providing the elastic portion 241, compared with a non-deformable rigid component, the deformable elastic portion 241 can weaken the squeezing effect on the electrode assembly 22; and the elastic portion 241 can be compressed so as to provide space for the swelling of the electrode assembly 22.

During the assembly of the battery cell 20, a pressing force can be provided between the current collecting member 24 and the end cover 23. After the battery cell 20 is assembled, the elastic portion 241 of the current collecting member 24 abuts against the end cover 23. The elastic portion 241 has the capability of elastically deforming; and in the case where the electrode assembly 22 swells, the elastic portion 241 can be compressed, so that the elastic portion 241 can provide buffer space for the swelling of the electrode assembly 22, reducing the risk of the electrode assembly 22 being squeezed. In addition, compared with a non-deformable rigid component, the deformable elastic portion 241 can weaken the squeezing effect on the electrode assembly 22, thereby further reducing the risk of the electrode assembly 22 being squeezed, reducing the risks of falling-off of coating, lithium precipitation, and the like caused by squeezing of the electrode assembly 22, and improving the reliability of the battery cell.

In addition, since the elastic portion 241 is in a state of abutting against the end cover 23 when the battery cell is assembled, even if the electrode assembly 22 contracts during subsequent charging and discharging of the battery cell 20, the elastic portion 241 can still abut against the end cover 23.

In the embodiments of the present application, the current collecting member 24 is located on the side of the electrode assembly 22 facing the end cover 23 and connected to the electrode assembly 22 and the housing 21, so that the electrical connection between the electrode assembly 22 and the housing 21 can be achieved through the current collecting member 24. The negative electrode active material includes the silicon element. The battery cell 20 has a higher energy density, and the electrode assembly 22 in the battery cell 20 has a greater swelling degree. The elastic portion 241 in the current collecting member 24 has the capability of elastically deforming. When the electrode assembly 22 swells, the elastic portion 241 is compressed so as to provide space for the swelling of the electrode assembly 22, thereby reducing the risk of the electrode assembly 22 being squeezed. Compared with a non-deformable rigid component, the deformable elastic portion 241 can weaken the squeezing effect on the electrode assembly 22, thereby further reducing the risk of the electrode assembly 22 being squeezed, reducing the risk of falling-off of coating, lithium precipitation, and the like caused by squeezing of the electrode assembly 22, and improving the reliability of the battery cell. Therefore, the technical solutions of the embodiments of the present application are conducive to improving the reliability of the battery cell 20.

In some embodiments, the elastic portion 241 can deform during charging and discharging of the battery cell.

During charging and discharging of the battery cell, the electrode assembly 22 swells and contracts. In the case where the electrode assembly 22 swells, the elastic portion 241 can be compressed so as to provide space for the swelling of the electrode assembly 22; and in the case where the electrode assembly 22 contracts, the elastic portion 241 can return from a compressed state to an uncompressed state (or from a greater compression degree to a lower compression degree).

In these embodiments, the elastic portion 241 can deform during charging and discharging of the battery cell, so that the space can be provided for the swelling of the electrode assembly 22; and in the case where the electrode assembly 22 contracts, the return of the elastic portion 241 to its original state is also facilitated.

In some embodiments, the end cover 23 is provided with a first protruding portion 232. The first protruding portion 232 protrudes toward the electrode assembly 22 along the thickness direction of the end cover 23. The first protruding portion 232 abuts against the elastic portion 241.

In the above technical solution, the provision of the first protruding portion 232 is conducive to improving the strength of the end cover 23. The abutment of the first protruding portion 232 against the elastic portion 241 is also conducive to reducing the size by which the elastic portion 241 protrudes from the current collecting body 240.

In some embodiments, the current collecting member 24 further includes a central portion 2413. The central portion 2413 is located on an inner side of the elastic portion 241.

Since the current collecting body 240 is an annular structure, the elastic portion 241 is located on the inner side of the current collecting body 240 and connected to the current collecting body 240, and the central portion 2413 is located on the inner side of the elastic portion 241. In this way, the central portion 2413 is basically a central area of the current collecting member 24. Moreover, since the current collecting member 24 is electrically connected to the tab 221, the central portion 2413 basically corresponds to a central area of the tab 221 of the electrode assembly 22.

As an example, the central portion 2413 is connected to the elastic portion 241. In this way, the central portion 2413, the elastic portion 241, and the current collecting body 240 may be connected to form an entirety.

As an example, in the case where the electrode assembly 22 swells, the central portion 2413 abuts against the tab 221.

As another example, in the case where the electrode assembly 22 contracts, there is a gap between the central portion 2413 and the tab 221.

As an example, during charging and discharging of the battery cell, the central portion 2413 always abuts against the tab 221.

In these embodiments, the elastic portion 241 is located between the central portion 2413 and the current collecting body 240, and the central portion 2413 corresponds to the central area of the tab 221 of the electrode assembly 22, thereby facilitating the provision of a certain supporting effect for the tab 221.

The central portion 2413 may have a disc-shaped structure or an irregular sheet-shaped structure.

As an example, the central portion 243 is provided with a through hole running through the central portion 243, so that the central portion 243 is weaker and easier to rupture when the battery cell 20 undergoes thermal runaway.

In some embodiments, the central portion 2413 abuts against the tab 221 of the electrode assembly 22. In this way, the central portion 2413 can provide a certain supporting effect for the tab 221, which is conducive to reducing shaking of the electrode assembly 22 in the housing 21.

In addition, in the case where the central portion 2413 is connected to the elastic portion 241, deformation of the elastic portion 241 can drive the central portion 2413 to move, so that the risk of excessive squeezing of the tab 221 by the central portion 2413 when the electrode assembly 22 expands can be reduced.

In some embodiments, the elastic portion 241 includes a first sheet 2411 and a second sheet 2412. The first sheet 2411 is connected to the inner side of the current collecting body 240 and extends obliquely in a direction approaching the end cover 23. The second sheet 2412 is connected to an outer side of the central portion 2413 and extends obliquely in a direction approaching the end cover 23. The first sheet 2411 and the second sheet 2412 are connected at an included angle of greater than 0° and less than 180° to form an abutting area 2414. The abutting area 2414 abuts against the end cover 23.

The included angle between the first sheet 2411 and the second sheet 2412 may be 10°, 20°, 30°, 60°, 80°, 90°, 100°, 120°, 160°, or any value within the above ranges.

As an example, both the first sheet 2411 and the second sheet 2412 are strip-shaped structures. As another example, the first sheet 2411 is a strip-shaped structure, and the second sheet 2412 is an annular structure.

As an example, along the thickness direction of the end cover 23, the current collecting body 240 and the central portion 2413 are flush. That is, the current collecting body 20 and the central portion 2413 are on the same plane.

Both the first sheet 2411 and the second sheet 2412 protrude toward the end cover 23 relative to the central portion 2413. A connection position between the first sheet 2411 and the second sheet 2412 forms the abutting area 2414. The abutting area 2414 abuts against the end cover 23. In the case where the electrode assembly 22 swells, the electrode assembly 22 swells in a direction toward the end cover 23, so that the electrode assembly 22 squeezes the central portion 2413, and the central portion 2413 moves in a direction approaching the end cover 23, thereby driving the first sheet 2411 and the second sheet 2412 to move in a direction approaching the end cover 23. The elastic portion 241 elastically deforms to provide space for the swelling of the electrode assembly 22.

In the above technical solution, the central portion 2413 abuts against the electrode assembly 22, the abutting area 2414 formed by the connection of the first sheet 2411 and the second sheet 2412 abuts against the end cover 23, and the elastic portion 241 has the capability of elastically deforming, so that during the swelling of the electrode assembly 22, the abutting area 2414 is compressed so as to provide space for the swelling of the electrode assembly 22, and the central portion 2413 can provide a relatively soft supporting effect for the electrode assembly 22. This can reduce the intensity of squeezing on the electrode assembly 22, thereby reducing the risks of falling-off of coating, lithium precipitation, and the like caused by excessive squeezing of the electrode assembly 22.

In some embodiments, the end cover 23 includes an end cover body 231 and a first protruding portion 232, where the first protruding portion 232 protrudes toward the electrode assembly 22 along the thickness direction of the end cover 23, and the first protruding portion 232 abuts against the abutting area 2414.

The end cover body 231 may be a plate-shaped structure. As an example, the end cover body 231 is a circular plate-shaped structure.

The first protruding portion 232 may be a protruding portion provided on the end cover body 231. For example, the first protruding portion 232 is a protrusion provided on the end cover body 231, and the protrusion protrudes toward the electrode assembly 22.

The provision of the first protruding portion 232 is conducive to improving the strength of the end cover 23, and is also conducive to reducing a distance between the end cover 23 and the abutting area 2414 along the thickness direction of the end cover 23, thereby facilitating the abutment of the end cover 23 against the abutting area 2414 of the elastic portion 241.

In some embodiments, the elastic portion 241 is provided with a first through hole 2415 running through the elastic portion 241 along the thickness direction of the elastic portion 241, where the first through hole 2415 extends from the first sheet 2411 to the second sheet 2412.

As an example, the first through hole 2415 may be in a shape of a long strip. Optionally, the first through hole 2415 may alternatively be circular, triangular, or of an irregular shape.

Optionally, independent first through holes 2415 may alternatively be provided on the first sheet 2411 and the second sheet 2412 respectively. The embodiments of the present application include but are not limited thereto.

The provision of the first through hole 2415 is more conducive to the deformation of the elastic portion 241, thereby further reducing the risk of the electrode assembly 22 being squeezed. In addition, the provision of the first through hole 2415 is also conducive to the discharge of high-temperature and high-pressure substances inside the battery cell 20 during thermal runaway.

In some embodiments, a plurality of elastic portions 241 are provided, and the elastic portions 241 are arranged at intervals along a circumferential direction of the current collecting body 240.

As an example, both the first sheet 2411 and the second sheet 2412 are strip-shaped structures. The current collecting member 24 includes a plurality of first sheets 2411 and a plurality of second sheets 2412. The plurality of first sheets 2411 and the plurality of second sheets 2412 are arranged at intervals along the circumferential direction of the current collecting body 240. As an example, the current collecting member 24 includes three first sheets 2411 and three second sheets 2412.

As another example, the first sheet 2411 is a strip-shaped structure. The second sheet 2412 is circular. The current collecting member 24 includes a plurality of first sheets 2411 and one second sheet 2412. The plurality of first sheets 2411 are arranged at intervals along a circumferential direction of the second sheet 2412 and connected to the second sheet 2412. The plurality of first sheets 2411 are also arranged at intervals along the circumferential direction of the current collecting body 240. As an example, the current collecting member 24 includes three first sheets 2411 and one second sheet 2412.

As an example, three elastic portions 241 are provided. An included angle between two adjacent elastic portions 241 is 120°.

A plurality of elastic portions 241 are provided, the elastic portions 241 are more uniformly distributed in the current collecting member 24, and the deformation of the plurality of elastic portions 241 is more uniform, thereby helping to more uniformly alleviate the squeezing force on the electrode assembly 22 and reduce the risk of different areas of the electrode assembly 22 being squeezed to different degrees. In addition, the intervals between adjacent elastic portions 241 are also conducive to forming relatively smooth exhaust channels, and are conducive to the discharge of high-temperature and high-pressure substances inside the battery cell 20 during thermal runaway.

In some embodiments, the current collecting member 24 further includes a current collecting sheet 242 connected to the current collecting body 240, where one current collecting sheet 242 is provided between two adjacent elastic portions 241, a side surface of the current collecting sheet 242 facing away from the end cover 23 is connected to the tab of the electrode assembly 22, and the current collecting sheet 242 is spaced from the elastic portion 241.

As an example, one current collecting sheet 242 is provided between two adjacent first sheets 2411, where the current collecting sheet 242 is spaced from the first sheet 2411, and the current collecting sheet 241 is spaced from the second sheet 2412. For example, a second gap 2402 is provided between the current collecting sheet 242 and the second sheet 2412 of the elastic portion 241, and a first gap 2401 is provided between the current collecting sheet 242 and the first sheet 2411 of the elastic portion 241. The second gap 2402 may be a through hole running through the current collecting member 24. The first gap 2401 may be a through hole running through the current collecting member 24.

The current collecting sheet 242 has two surfaces opposite along its thickness direction. A side surface of the current collecting sheet 242 facing the electrode assembly 22 (which can also be referred to as the side surface facing away from the end cover 23) is connected to the tab 221 of the electrode assembly 22. Specifically, the current collecting sheet 242 may be connected to the tab 221 by welding.

The current collecting sheet 242 may have a fan-shaped structure, so that the shape of the current collecting sheet 242 is adapted to the shapes of the current collecting body 240 and the elastic member 241.

In the above technical solution, the side surface of the current collecting sheet 242 facing away from the end cover 23 is connected to the electrode assembly 22, so that the current of the electrode assembly 22 can be transmitted to the housing through the current collecting sheet 242. The current collecting sheet 242 is spaced from the elastic portion 241, so that a spaced area between the current collecting sheet 242 and the elastic portion 241 can form a smooth exhaust channel, which is conducive to smooth discharge of emissions from the battery cell 2020. In addition, the spaced area is provided between the current collecting sheet 242 and the elastic portion 241, and the current collecting sheet 242 can move relative to the current collecting body 240, helping to reduce the risk of the electrode assembly 22 being squeezed or torn.

In some embodiments, the current collecting member 24 includes a current collecting body 240, an elastic portion 241, a central portion 2413, and a current collecting sheet 242. Both the current collecting sheet 242 and the elastic portion 241 are connected to the annular current collecting body 240. The central portion 2413 is connected to the elastic portion 241 and located on the inner side of the elastic portion 241. The elastic portion 241 is spaced from the current collecting sheet 242. In this way, the central portion 2413 and the elastic portion 241 are connected to form an entirety. Both the elastic portion 241 and the current collecting sheet 242 are connected to the current collecting body 240, thereby constituting the current collecting member 24.

In some embodiments, at least one current collecting sheet 242 is welded to the tab 221 of the electrode assembly 22 to form a plurality of welded portions 2421. The plurality of welded portions 2421 are arranged at intervals along the circumferential direction of the current collecting body 240. The provision of the plurality of welded portions 2421 is conducive to enhancing the connection strength between the tab 221 and the current collecting sheet 242.

As an example, the welded portion 2421 may be a weld mark formed by welding the current collecting sheet 242 and the tab 221.

As an example, the current collecting member 24 includes three current collecting sheets 242. The three current collecting sheets 242 are welded to the tab 221 to form three welded portions 2421. The three welded portions 2421 are arranged at intervals along the circumferential direction of the current collecting body 240.

As an example, the welded portion 2421 has an elliptical structure.

In some embodiments, the welded portions 2421 include a first welded portion 24211 and two second welded portions 24212, where the first welded portion 24211 is located between the two second welded portions 24212, and a length of the first welded portion 24211 is greater than a length of the second welded portion 24212. In this way, the provision of the first welded portion 24211 and the second welded portion 24212 is adapted to the shape of the current collecting sheet 242, facilitating welding between the welded portions 2421 and the current collecting sheet 242.

In some embodiments, the end cover 23 is provided with an end cover body 231 and a pressure relief mechanism 26, where the pressure relief mechanism 26 is located on an inner side of the end cover body 231, and the elastic portion 241 abuts against the pressure relief mechanism 26.

The pressure relief mechanism 26 is an element or component configured to actuate when the internal pressure or temperature of the battery cell 20 reaches a predetermined threshold to relieve the internal pressure or temperature of the battery cell 20. The predetermined threshold can be adjusted according to different design requirements. For example, the predetermined threshold can depend on the material of one or more of the positive electrode sheet, the negative electrode sheet, the electrolyte, and the separator in the battery cell.

"Actuate" means that the pressure relief mechanism 26 produces an action or is activated to a certain state, thereby relieving the internal pressure and temperature of the battery cell 20. The action produced by the pressure relief mechanism 26 can include but is not limited to: at least a portion of the pressure relief mechanism 26 ruptures, breaks, is torn, or is opened. When the pressure relief mechanism 26 actuates, high-temperature and high-pressure substances inside the battery cell 20 are discharged outward as emissions from an actuated position. In this way, the battery cell 20 can relieve pressure and temperature under controllable pressure or temperature, thereby reducing the risk of potentially more serious accidents.

The emissions from the battery cell 20 mentioned in the embodiments of the present application include but are not limited to: the electrolyte, dissolved or separated positive and negative electrode sheets, fragments of the separator, fragments of the current collecting member 24, high-temperature and high-pressure gases generated by reaction, flames, and the like.

The pressure relief mechanism 26 may be a separate structure from the end cover 23. For example, the pressure relief mechanism 26 is an independent component installed on the end cover 23. The pressure relief mechanism 26 may be an explosion-proof valve, an explosion-proof sheet, a gas valve, a pressure relief valve, a safety valve, or the like installed on the end cover 23, and can specifically adopt a pressure-sensitive or temperature-sensitive element or structure.

The pressure relief mechanism 26 may be an integrated structure with the end cover 23. For example, the pressure relief mechanism 26 is a portion of the end cover 23. For example, the pressure relief mechanism can be formed by providing a score on the end cover 23, and the thickness at the score is significantly less than the thickness of other areas of the end cover 23. The score is the weakest position of the pressure relief mechanism. When too much gas is generated in the battery cell 20 so that the internal pressure rises and reaches a threshold or the internal reaction of the battery cell 20 generates heat and causes the internal temperature of the battery cell 20 to rise and reach a threshold, the pressure relief mechanism 26 can rupture at the score, causing the interior and exterior of the battery cell 20 to be in communication with each other. The gas pressure and temperature are released outward through the cracking of the pressure relief mechanism 26, thereby avoiding explosion of the battery cell 20. As an example, the end cover 23 is provided with a score groove, and an area defined by the score groove forms the pressure relief mechanism 26.

In the above technical solution, the pressure relief mechanism 26 is located on the inner side of the end cover body 231, which can reduce the risk of the pressure relief mechanism 26 being damaged due to interference with components outside the battery cell 2020, helping to improve the long-term reliability of the pressure relief mechanism 26. The elastic portion 241 abuts against the pressure relief mechanism 26, facilitating the connection between the elastic portion 241 and the end cover 23.

As an example, the abutting area 2411 of the elastic portion 241 abuts against the pressure relief mechanism 26, thereby facilitating the abutment between the elastic portion 241 and the end cover 23. In addition, when the pressure relief mechanism 26 actuates, the emissions inside the battery cell 20 are also conveniently discharged through an exhaust channel formed by the current collecting member 24 (for example, a first gap 2401 and a second gap 2402).

In some embodiments, the pressure relief mechanism 26 is provided with a first protruding portion 232. The first protruding portion 232 protrudes toward the electrode assembly 22 along the thickness direction of the end cover 23. The first protruding portion 232 abuts against the abutting area 2414 of the elastic portion 241. In this way, the connection between the elastic portion 241 and the end cover 23 is facilitated.

As an example, the first protruding portion 232 is provided in the area defined by the pressure relief mechanism 26, and the first protruding portion 232 abuts against the abutting area 2414 of the elastic portion 241. In this way, the position of the first protruding portion 232 corresponds to the abutting area 2414, and the first protruding portion 232 is farther from an edge of the end cover 23, facilitating processing of the first protruding portion 232.

FIG. 11 is a schematic structural diagram of an end cover according to an embodiment of the present application. In some embodiments, for example, referring to FIG. 7 and FIG. 11, the end cover 23 is provided with a score groove 261. An area defined by the score groove 261 forms the pressure relief mechanism 26. The first protruding portion 232 is located on an inner side of the score groove 261 and spaced from the score groove 261.

As an example, the score groove 261 is in a shape of an annulus with a notch. A thickness of an area of the end cover 23 provided with the score groove 261 is smaller than a thickness of an area not provided with the score groove 261, so that the score groove 261 of the end cover 23 is prone to rupture during thermal runaway.

In the above embodiments, the first protruding portion 232 is spaced from the score groove 261. In this way, the preparation of the score groove 261 is facilitated, and adverse effects on the precision of the score groove 261 can be reduced. In addition, the provision of the score groove 261 is also conducive to reducing the risk of the pressure relief mechanism 26 interfering with structures outside the battery cell 20.

In some embodiments, the current collecting member 24 is welded to the housing 21. The current collecting member 24 can be directly welded to the housing 21, or can be welded to the housing 21 through a special structure provided on the current collecting member 24.

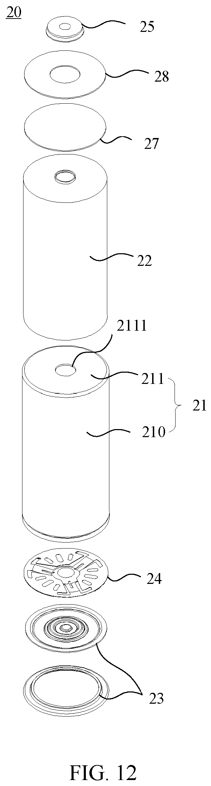

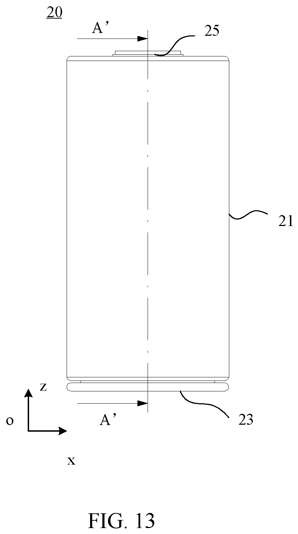

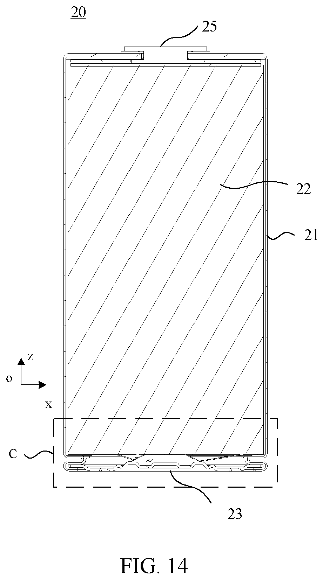

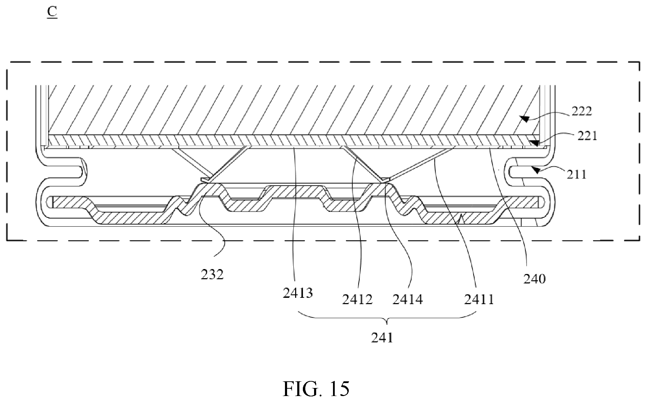

FIG. 12 is a schematic exploded view of a structure of a battery cell according to another embodiment of the present application. FIG. 13 is a schematic structural diagram of a battery cell according to another embodiment of the present application. FIG. 14 is a cross-sectional view of the battery cell in FIG. 13 along A'-A'. FIG. 15 is an enlarged schematic diagram of area C in FIG. 14.

In some embodiments, referring to FIGs. 12 to 15, a limiting portion 211 is disposed on an inner side surface of the housing 21 in a protruding manner. The current collecting member 24 abuts against the limiting portion 211. The tab 221 of the electrode assembly 22 is electrically connected to the housing 21 through the current collecting member 24.

The inner side surface of the housing 21 refers to an inner side surface of a side wall of the housing 21 extending along the thickness direction of the end cover 23. Understandably, the inner side surface basically extends along the thickness direction of the end cover 23. In an embodiment where the housing 21 is a cylinder, the inner side surface of the housing 21 is a cylindrical surface. In an embodiment where the housing 21 is a cuboid, the inner side surface of the housing 21 includes four side surfaces located in different orientations and connected end to end in sequence.

The limiting portion 211 is disposed on an inner side surface of the housing 21 in a protruding manner. Understandably, the limiting portion 211 protrudes from the inner side surface. The limiting portion 211 is a structure of the housing 21 that limits the movement of the end cover 23 in a direction approaching the electrode assembly 22. The current collecting member 24 abuts against a side of the limiting portion 211 facing the electrode assembly 22, and the current collecting member 24 is located on the side of the electrode assembly 22 facing the end cover 23. Understandably, in the thickness direction of the end cover 23, the limiting portion 211 is located between the electrode assembly 22 and the end cover 23. The limiting portion 211 and the housing 21 may be an integrally formed structure or a structure formed by separately forming and then connecting together. For example, the limiting portion 211 is welded to the housing 21. The limiting portion 211 may use various structures. For example, the limiting portion 211 is a boss protruding from the inner side surface of the housing 21. For another example, the limiting portion 211 is an annular structure extending along a circumferential direction of the housing 21.

The provision of the limiting portion 211 can not only limit the end cover 23 but also limit the current collecting member 24, so that the current collecting member 24 can limit the movement of the electrode assembly 22, reducing the displacement of the electrode assembly 22 in the housing 21 along the thickness direction of the end cover 23, and reducing the risk of failure of the connection between the tab of the electrode assembly 22 and the current collecting member 24 due to excessive displacement of the electrode assembly 22.

In some embodiments, the end cover 23 is welded to the housing 21.

In some embodiments, the battery cell 20 further includes a current collecting disc 27. The current collecting disc 27 may have a different structure from the current collecting member 24. The current collecting disc 27 may be a disc. The current collecting disc 27 and the current collecting member 24 are respectively located at two ends of the housing 21 and connected to electrodes having opposite polarities. As an example, the current collecting disc 27 is connected to the positive tab, and the current collecting member 24 is connected to the negative tab.

In some embodiments, the battery cell 20 further includes an insulating member 28, where the insulating member 28 is configured to isolate the electrode terminal 25 and the housing 21.

In some embodiments, the negative electrode active material includes at least one of elemental silicon, a silicon-oxygen compound, a silicon-carbon composite, a silicon-nitrogen composite, a silicon-containing alloy, or a silicon-oxygen-carbon composite material. In this way, the battery cell may have a higher energy density.

In some embodiments, based on a total mass of the negative electrode active material, a mass percentage A of the silicon element in the negative electrode active material satisfies: 1wt%≤A≤15wt%. Optionally, 2wt%≤A≤8wt%. For example, A is 1wt%, 2wt%, 3wt%, 6wt%, 8wt%, 15wt%, or any value within the above ranges.

In addition to the negative electrode active material, the negative electrode film layer may optionally include a conductive agent and a binder.

As an example, the conductive agent in the negative electrode film layer may include one or more of superconducting carbon, conductive graphite, acetylene black, carbon black, Ketjen black, carbon dots, carbon nanotubes, graphene, and carbon nanofiber.

As an example, the binder in the negative electrode film layer may include one or more of styrene-butadiene rubber (SBR), water-soluble unsaturated resin SR-1B, aqueous acrylic resin (for example, polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS).

In some embodiments, the negative electrode active material may further include other additives. As an example, the other additives may include a thickener, for example, sodium carboxymethyl cellulose (CMC) and a PTC thermistor material.

As an example, the mass of silicon in the negative electrode active material can be tested by inductively coupled plasma emission spectrometry (ICP).

In the negative electrode active material, the silicon element has an appropriate mass percentage, so that the electrode assembly 22 has a relatively appropriate swelling rate, facilitating normal use of the battery cell 20.

In some embodiments, the positive electrode sheet includes a positive electrode active material, and a chemical formula of the positive electrode active material satisfies: Li₁₊ₐ[NiₓCo_{y}Mn_{z}M_{b}]O₂, where M includes at least one of Zr, Al, Ti, Sb, Nb, Te, Mg, B, Ca, V, Ta or Sr, 0.1≥a≥-0.1, 1>x≥0.7, 0.3>y>0, 0.3>z>0, 0.3>b≥0, and x+y+z+b=1.
a may be -0.1, -0.04, 0, 0.04, 0.1, or any value within the above ranges, x may be 0.7, 0.75, 0.8, 0.9, 0.95, 0.96, or any value within the above ranges; y may be 0.1, 0.2, or any value within the above ranges; z may be 0.1, 0.2, or any value within the above ranges; and b may be 0, 0.1, 0.2, or any value within the above ranges. As an example, b is 0, and the positive electrode active material includes LiNi_{0.8}Co_{0.1}Mn_{0.1}O₂. As another example, b>0, and the positive electrode active material includes LiNi_{0.7}Co_{0.1}Mn_{0.1}Al_{0.1}O₂.

The positive electrode active material satisfying the above chemical formula may be referred to as a high-nickel ternary material. The high-nickel ternary material is matched with the silicon-containing negative electrode active material, which is conducive to increasing the energy density of the battery cell. In addition, compared with a ternary material with a lower nickel content or materials such as lithium iron phosphate, the high-nickel ternary material has a higher gram capacity, so that under the same capacity, the use of the high-nickel ternary material is conducive to reducing the total mass of the positive electrode active material, thereby helping to further increase the energy density of the battery cell.

It should be noted that during charging and discharging of the battery cell, intercalation, deintercalation, and consumption of Li are accompanied, and a molar amount of Li is different when the battery cell is discharged to different states. In the enumeration of the positive electrode active material in the embodiments of the present application, the molar amount of Li is an initial state of the material. The positive electrode active material is applied to a battery system; and after charging and discharging cycles, the molar amount of Li changes. In the enumeration of the positive electrode active material in the embodiments of the present application, a molar amount of O is only a theoretical state value, and lattice oxygen release will cause the molar amount of oxygen to change, and the actual molar amount of O fluctuates.

In some embodiments, the positive electrode active material includes at least one of LiNi_{0.90}Co_{0.06}Mn_{0.04}O₂, LiNi_{0.7}Co_{0.1}Mn_{0.2}O₂, LiNi_{0.7}Co_{0.2}Mn_{0.1}O₂, or LiNi_{0.8}Co_{0.1}Mn_{0.1}O₂.

In some embodiments, the negative electrode active material includes a composite material of silicon and graphite, or a mixture of silicon and graphite, where graphite may be natural graphite or artificial graphite.

As an example, the negative electrode active material is a mixture of a silicon-carbon material and artificial graphite, where based on the total mass of the negative electrode active material, a mass percentage of artificial graphite is about 95%, a mass percentage of the silicon-carbon material is about 5%, and a mass percentage of silicon in the silicon-carbon material is about 50%.

As an embodiment, the positive electrode active material is LiNi_{0.90}Co_{0.06}Mn_{0.04}O₂, and the negative electrode active material is a mixture of a silicon-carbon material and graphite. Further, as another example, the positive electrode active material is LiNi_{0.90}Co_{0.06}Mn_{0.04}O₂, the negative electrode active material is a mixture of a silicon-carbon material and graphite, and based on the total mass of the negative electrode active material, a mass percentage of artificial graphite is about 95%, a mass percentage of the silicon-carbon material is about 5%, and a mass percentage of silicon in the silicon-carbon material is about 50%.

In the above embodiments, the provision of the positive electrode active material and the negative electrode active material can enable the battery cell 20 to have a higher energy density.

In some embodiments, a material of the housing 21 includes carbon steel or stainless steel.

The use of carbon steel or stainless steel can reduce the risk of the housing 21 being corroded by an electrolyte. For example, in some embodiments, the housing 21 is electrically connected to the negative tab, the housing 21 is in a low potential state, and the steel housing 21 in a low potential state is not easily corroded by the electrolyte.

In some embodiments, the battery cell 20 is a cylindrical battery cell 20. In this way, the shape of the current collecting member 24 is adapted to the shape of the battery cell 20, facilitating assembly of the battery cell 20.

In some embodiments, the housing 21 includes a cylinder 210 and a cover 211 connected to the cylinder 210. The cover 211 and the cylinder 210 are formed as an integrated or separate structure. The cylinder 210 is arranged around the periphery of the electrode assembly 22. The cover 211 is provided with an electrode lead-out hole 2111. The battery cell 20 further includes an electrode terminal 25. The electrode terminal 25 is disposed in the electrode lead-out hole 2111 in an insulating manner.

As an example, the cover 211 and the cylinder 210 are an integrally formed structure.

As another example, the cover 211 and the cylinder 210 are a separately formed structure. The cover 211 may be disc-shaped. The cylinder 210 may be cylindrical.

In these embodiments, one of the housing 21 and the electrode terminal 25 is a positive electrode output pole of the battery cell 20, and the other is a negative electrode output pole of the battery cell 20. At least a portion of the housing 21 can serve as one output pole of the battery cell 20, thereby omitting one electrode terminal, and helping to simplify the structure of the battery cell 20.

An embodiment of the present application provides a battery including the battery cell 20 in any one of the above embodiments.

An embodiment of the present application provides an electric apparatus including the battery in any one of the above embodiments.

In an embodiment of the present application, a battery cell 20 includes an electrode assembly 22, a housing 21, an end cover 23, and a current collecting member 24. The housing 21 is configured to accommodate the electrode assembly 22 and the current collecting member 24. The housing 21 has an opening. The end cover 23 is configured to cover the opening. The current collecting member 24 is connected to the electrode assembly 22 and the housing 21 respectively, thereby achieving the electrical connection between the electrode assembly 22 and the housing 21 through the current collecting member 24. A negative electrode active material in the battery cell 20 includes the silicon element. The battery cell 20 has a higher energy density and higher swelling. The current collecting member 24 includes a current collecting body 240 and an elastic portion 241. The current collecting body 240 is an annular structure. The elastic portion 241 is located on an inner side of the current collecting body 240 and connected to the current collecting body 240. The elastic portion 241 protrudes toward the end cover 23 from the current collecting body 240 and abuts against the end cover 23. Through the above arrangement, the battery cell 20 has a higher energy density. In addition, the impact of a high swelling rate of the active material on the battery cell 20 can also be reduced, and the risk of the electrode assembly 22 being squeezed and causing falling-off of coating and lithium precipitation is lower. The battery cell 20 has higher reliability and higher energy density.

Although the present application has been described with reference to preferred embodiments, various improvements can be made thereto and components therein can be replaced with equivalents without departing from the scope of the present application. In particular, as long as there is no structural conflict, the various technical features mentioned in the various embodiments can be combined in any manner. The present application is not limited to the specific embodiments disclosed herein, but includes all technical solutions falling within the scope of the claims.

## Claims

1. A battery cell, **characterized by** comprising:
an electrode assembly (22) comprising a negative electrode sheet, wherein the negative electrode sheet comprises a negative electrode active material capable of reversibly deintercalating and intercalating metal ions, and the negative electrode active material comprises the silicon element;
a housing (21) provided with an opening, the housing (21) being configured to accommodate the electrode assembly (22);
an end cover (23) covering the opening; and
a current collecting member (24) accommodated in the housing (21) and located on a side of the electrode assembly (22) facing the end cover (23), wherein the current collecting member (24) is electrically connected to a tab (221) of the electrode assembly (22) and the housing (21);
wherein the current collecting member (24) comprises a current collecting body (240) and an elastic portion (241), the current collecting body (240) is an annular structure, the elastic portion (241) is located on an inner side of the current collecting body (240) and connected to the current collecting body (240), and at least a portion of the elastic portion (241) along a thickness direction of the end cover (23) protrudes from the current collecting body (240) and abuts against the end cover (23).

2. The battery cell according to claim 1, **characterized in that** the elastic portion (241) is capable of deforming during charging and discharging of the battery cell.

3. The battery cell according to claim 1 or 2, **characterized in that** the end cover (23) is provided with a first protruding portion (232), wherein the first protruding portion (232) protrudes toward the electrode assembly (22) along the thickness direction of the end cover (23), and the first protruding portion (232) abuts against the elastic portion (241).

4. The battery cell according to any one of claims 1 to 3, **characterized in that** the current collecting member (24) further comprises a central portion (2413), wherein the central portion (2413) is located on an inner side of the elastic portion (241).

5. The battery cell according to claim 4, **characterized in that** the central portion (2413) abuts against the tab (221) of the electrode assembly (22).

6. The battery cell according to claim 4 or 5, **characterized in that** the elastic portion (241) comprises a first sheet (2411) and a second sheet (2412), wherein the first sheet (2411) is connected to the inner side of the current collecting body (240) and extends obliquely in a direction approaching the end cover (23), the second sheet (2412) is connected to an outer side of the central portion (2413) and extends obliquely in a direction approaching the end cover (23), the first sheet (2411) and the second sheet (2412) are connected at an included angle of greater than 0° and less than 180° to form an abutting area (2414), and the abutting area (2414) abuts against the end cover (23).

7. The battery cell according to claim 6, **characterized in that** the end cover (23) comprises an end cover body (231) and a first protruding portion (232), wherein the first protruding portion (232) protrudes toward the electrode assembly (22) along the thickness direction of the end cover (23), and the first protruding portion (232) abuts against the abutting area (2414).

8. The battery cell according to claim 6 or 7, **characterized in that** the elastic portion (241) is provided with a first through hole (2415) running through the elastic portion (241) along a thickness direction of the elastic portion (241), wherein the first through hole (2415) extends from the first sheet (2411) to the second sheet (2412).

9. The battery cell according to any one of claims 1 to 8, **characterized in that** a plurality of elastic portions (241) are provided, and the elastic portions (241) are arranged at intervals along a circumferential direction of the current collecting body (240).

10. The battery cell according to claim 9, **characterized in that** the current collecting member (24) further comprises a current collecting sheet (242) connected to the current collecting body (240), wherein one current collecting sheet (242) is provided between two adjacent elastic portions (241), a side surface of the current collecting sheet (242) facing away from the end cover (23) is connected to the tab (221) of the electrode assembly (22), and the current collecting sheet (242) is spaced from the elastic portion (241).

11. The battery cell according to claim 10, **characterized in that** at least one current collecting sheet (242) is welded to the tab (221) of the electrode assembly (22) to form a plurality of welded portions (2421), and the plurality of welded portions (2421) are arranged at intervals along the circumferential direction of the current collecting body (240).

12. The battery cell according to claim 11, **characterized in that** the welded portions (2421) comprise a first welded portion (24211) and two second welded portions (24212), wherein the first welded portion (24211) is located between the two second welded portions (24212), and a length of the first welded portion (24211) is greater than a length of the second welded portion (24212).

13. The battery cell according to any one of claims 1 to 12, **characterized in that** the end cover (23) is provided with an end cover body (231) and a pressure relief mechanism (26), wherein the pressure relief mechanism (26) is located on an inner side of the end cover body (231), and the elastic portion (241) abuts against the pressure relief mechanism (26).

14. The battery cell according to claim 13, **characterized in that** the pressure relief mechanism (26) is provided with a first protruding portion (232), wherein the first protruding portion (232) protrudes toward the electrode assembly (22) along the thickness direction of the end cover (23), and the first protruding portion (232) abuts against an abutting area (2414) of the elastic portion (241).

15. The battery cell according to claim 14, **characterized in that** the end cover (23) is provided with a score groove (261), an area defined by the score groove (261) forms the pressure relief mechanism (26), and the first protruding portion (232) is located on an inner side of the score groove (261) and spaced from the score groove (261).

16. The battery cell according to any one of claims 1 to 15, **characterized in that** a limiting portion (211) is disposed on an inner side surface of the housing (21) in a protruding manner, the current collecting member (24) abuts against the limiting portion (211), and the tab (221) of the electrode assembly (22) is electrically connected to the housing (21) through the current collecting member (24).

17. The battery cell according to claim 16, **characterized in that** the current collecting member (24) is welded to the housing (21).

18. The battery cell according to any one of claims 1 to 17, **characterized in that** the negative electrode active material comprises at least one of elemental silicon, a silicon-oxygen compound, a silicon-carbon composite, a silicon-nitrogen composite, a silicon-containing alloy, or a silicon-oxygen-carbon composite material.

19. The battery cell according to claim 18, **characterized in that** based on a total mass of the negative electrode active material, a mass percentage A of the silicon element in the negative electrode active material satisfies: 1wt%≤A≤15wt%.

20. The battery cell according to claim 19, **characterized in that** based on the total mass of the negative electrode active material, the mass percentage A of the silicon element in the negative electrode active material satisfies: 2wt%≤A≤8wt%.

21. The battery cell according to any one of claims 1 to 20, **characterized in that** the electrode assembly (22) further comprises a positive electrode sheet and a separator, wherein the separator is located between the positive electrode sheet and the negative electrode sheet; and
the positive electrode sheet comprises a positive electrode active material, and a chemical formula of the positive electrode active material satisfies: Li₁₊ₐ[NiₓCo_{y}Mn_{z}M_{b}]O₂, wherein M comprises at least one of Zr, Al, Ti, Sb, Nb, Te, Mg, B, Ca, V, Ta or Sr, 0.1≥a≥-0.1, 1>x≥0.7, 0.3>y>0, 0.3>z>0, 0.3>b≥0, and x+y+z+b=1.

22. The battery cell according to any one of claims 1 to 21, **characterized in that** a material of the housing (21) comprises carbon steel or stainless steel.

23. The battery cell according to any one of claims 1 to 22, **characterized in that** the battery cell is a cylindrical battery cell.

24. The battery cell according to any one of claims 1 to 23, **characterized in that**
the housing (21) comprises a cylinder (210) and a cover (211) connected to the cylinder (210), wherein the cover (211) and the cylinder (210) are formed as an integrated or separate structure, the cylinder (210) is arranged around a periphery of the electrode assembly (22), and the cover (211) is provided with an electrode lead-out hole (2111); and
the battery cell further comprises an electrode terminal (25), and the electrode terminal (25) is disposed in the electrode lead-out hole (2111) in an insulating manner.

25. A battery, **characterized by** comprising: the battery cell according to any one of claims 1 to 24.

26. An electric apparatus, **characterized by** comprising: the battery according to claim 25.
